# EUROPEAN PATENT SPECIFICATION

(11) **EP 3 039 737 B1**
(45) Date of publication and mention of the grant of the patent: **08.05.2019**
(21) Application number: 14840591.3
(22) Date of filing: 28.08.2014
(51) Int. Cl.: H01M 10/052, H01M 10/0562, H01M 10/0565, H01M 2/16

(54) **LI-ION BATTERY WITH COATED ELECTROLYTE**
LI-IONEN-BATTERIEN MIT BESCHICHTETEM ELEKTROLYT
BATTERIE LI-ION AVEC ÉLECTROLYTE REVÊTU

(30) Priority: 30.08.2013 US 201361871933 P
(43) Date of publication of application: 06.07.2016
(73) Proprietor: Robert Bosch GmbH, 70442 Stuttgart (DE)
(72) Inventor: CHRISTENSEN, John, F., Mountain View, CA 94043 (US); KNUDSEN, Edward, Menlo Park, CA 94025 (US); KOJIC, Aleksander, Sunnyvale, CA 94086 (US)
(86) International application number: PCT/US2014/053155
(87) International publication number: WO 2015/031612

(56) References cited:
- WO-A1-2011/102027
- JP-A- 2008 218 178
- JP-A- 2012 014 892
- KR-A- 20060 118 345
- US-A1- 2007 172 739
- US-A1- 2010 104 948
- US-A1- 2010 143 769
- US-A1- 2010 233 548
- US-B2- 6 699 619

## Description

### Field of the Disclosure

The present disclosure relates to batteries and more particularly to lithium-metal batteries.

### Background

Batteries are a useful source of stored energy that can be incorporated into a number of systems. Rechargeable lithium-ion ("Li-ion") batteries are attractive energy storage systems for portable electronics and electric and hybrid-electric vehicles because of their high specific energy compared to other electrochemical energy storage devices. In particular, batteries with a form of lithium metal incorporated into the negative electrode afford exceptionally high specific energy (measured in Wh/kg) and energy density (measured in Wh/L) compared to batteries with conventional carbonaceous negative electrodes.

When high-specific-capacity negative electrodes such as lithium are used in a battery, the maximum benefit of the capacity-increase over conventional systems is realized when a high-capacity positive electrode active material is also used. Conventional lithium-intercalating oxides (e.g., LiCoO₂, LiNi_{0.8}Co_{0.15}Al_{0.05}O₂, and Li_{1.1}Ni_{0.3}Co_{0.3}Mn_{0.3}O₂) are typically limited to a theoretical capacity of ∼280 mAh/g (based on the mass of the lithiated oxide) and a practical capacity of 180 to 250 mAh/g. In comparison, the specific capacity of lithium metal is about 3863 mAh/g. The highest theoretical capacity achievable for a lithium-ion positive electrode is 1168 mAh/g (based on the mass of the lithiated material), which is shared by Li₂S and Li₂O₂. Other high-capacity materials including BiF₃ (303 mAh/g, lithiated) and FeF₃ (712 mAh/g, lithiated) are identified in Amatucci, G.G. and N. Pereira, Fluoride based electrode materials for advanced energy storage devices. Journal of Fluorine Chemistry, 2007. 128(4): p. 243-262. All of the foregoing materials, however, react with lithium at a lower voltage compared to conventional oxide positive electrodes, hence limiting the theoretical specific energy. The theoretical specific energies of the foregoing materials, however, are very high (> 800 Wh/kg, compared to a maximum of ∼500 Wh/kg for a cell with lithium negative and conventional oxide positive electrodes).

Thus the advantage of using a Li metal negative electrode (sometimes referred to as an anode) is the much higher energy density of the entire cell, as compared to cells with graphitic or other intercalation negative electrode. A disadvantage of using pure Li metal is that lithium is highly reactive. Accordingly, the lithium metal has a propensity to undergo morphology changes, which cause structures having a high surface area to form on and around the negative electrode when the cell is being charged. Exemplary high surface area structures include dendrites and mossy structures.

Dendrites are the most common failure mode for cells with Li metal anodes. The dendrites form with a needle-like structure and can grow through the separator during charging of the cell, resulting in an internal short. "Soft shorts" that burn out rapidly result in a temporary self-discharge of the cell, while "strong shorts" consisting of a higher, more stable contact area can lead to complete discharge of the cell, cell failure, and even thermal runaway. While dendrites typically grow through the separator during charge, shorts can also develop during discharge depending on the external pressure placed on the cell and/or internal volume changes that occur in both the negative and positive electrodes.

Because Li metal is highly electronically conductive, the surface of the Li tends to roughen as the metal is plated and stripped. Peaks in the surface grow as dendrites during charge. During discharge, some smoothing of the dendrites occurs. Nonetheless, there is typically some roughness that remains at the end of discharge. Depending on the depth of discharge, the overall roughness can be amplified from one cycle to the next. Because the metal is essentially at the same electrochemical potential throughout, potential and, to a lesser extent, concentration gradients in the electrolyte phase drive the change in morphology.

Related to dendrite initiation and growth is development of the Li morphology, which tends to increase the electrode surface area with cycling and consumes solvent to generate fresh passivation layers. Formation of high-surface-area mossy Li tends to occur during low-rate deposition from a liquid electrolyte, especially if the salt concentration is high. The high surface area combined with high reactivity of Li and flammability of the organic solvent makes for a very reactive and dangerous cell. JP 2012 014892 A relates to a nonaqueous electrolyte battery where on the battery a positive pole member having a positive pole active material layer and a negative pole member having a negative pole active material layer 22 are laminated, and in the positive pole member, a solid electrolyte layer is formed on the positive pole active material layer 12. Then, both of the members are laminated so that the solid electrolyte layer is arranged between both of the active material layers and a joint surface between them is provided with an inclusion layer consisting of polymer containing lithium salt, or ion liquid. In addition, the negative pole active material layer 22 contains a negative pole active material of an oxide system or a sulfide system, in which a lithium ion can be inserted/detached from between crystal gratings.

What is therefore needed is an electrochemical cell including a form of lithium in the anode which exhibits reduced susceptibility to internal passage of electrons or solvent.

### Summary

The invention is defined by the appended claims. Disclosed is a lithium-ion battery including an anode, a cathode, a solid electrolyte layer positioned between the anode and the cathode, and a first protective layer continuously coating a cathode facing side of the solid electrolyte layer, the first protective layer formed on the cathode facing side in such a manner that a space within the solid electrolyte layer opening to the cathode facing side is filled with a first protective layer finger.

The solid electrolyte layer can be positioned against a current collector in the anode prior to initial charging of the battery.

The cathode can include a form of sulfur.

The first protective layer comprises Al₂O₃ or Si₃N₄.

The solid electrolyte layer can have a thickness of about 100 nm to 50 µm, and the first protective layer has a nominal thickness of between about 1 nm and 50 nm.

The lithium-ion battery can include a second protective layer coating an anode facing side of the solid electrolyte layer, the second protective layer formed on the anode facing side in such a manner that a space within the solid electrolyte layer opening to the anode facing side is filled with a second protective layer finger.

Disclosed is a method of forming a battery including providing an anode, providing a cathode, filling a space within a solid electrolyte layer opening to a first side of the solid electrolyte layer with a protective layer finger, forming a continuous coating of a first protective layer on the first side, and positioning the solid electrolyte layer between the anode and the cathode with the first protective layer positioned between the electrolyte layer and the cathode.

The continuous coating includes forming the continuous coating of the first protective layer on the first side of the solid electrolyte layer using chemical vapor deposition or atomic layer deposition.

Forming the continuous coating includes forming a continuous coating of Al₂O₃ or Si₃N₄ on the first side.

The method can include forming a continuous coating of a second protective layer on a second side of the solid electrolyte layer.

The solid electrolyte layer between the anode and the cathode can include positioning the solid electrolyte layer between the anode and the cathode with the second protective layer positioned between the electrolyte layer and the cathode.

The method can include polishing the second protective layer, and exposing a portion of the second side by polishing the second protective layer.

Providing the anode can include providing an anode including a form of lithium.

The cathode can include providing a cathode including a form of sulfur.

Forming the continuous coating can include forming the continuous coating with a nominal thickness of between about 1 nm and 50 nm.

The solid electrolyte layer between the anode and the cathode can include positioning the solid electrolyte layer directly against a current collector in the anode.

### Brief Description of the Drawings

FIG. 1 depicts a simplified schematic of an electrochemical cell including a separator structure with a protective layer immediately adjacent to the cathode;
FIG. 2 depicts a simplified schematic of an anode and an electrolyte layer with defects; and
FIG. 3 depicts a simplified schematic of the anode and electrolyte layer of FIG. 2 with a finally formed separator structure including a protective layer which covers one side of the electrolyte layer and which fills at least some of the defects in the electrolyte layer.

### Description

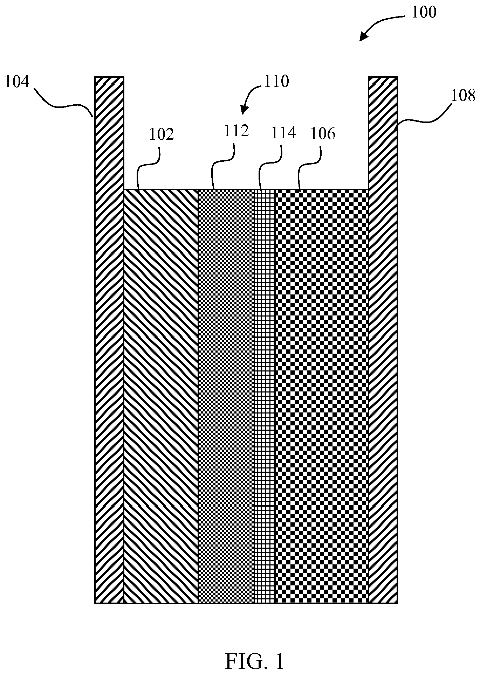

FIG. 1 depicts an electrochemical cell 100 which includes an anode 102 with a copper current collector 104, a cathode 106 with an aluminum current collector 108, and a separator structure 110. The anode 102 includes lithium metal or a lithium alloy metal. The anode 102 is sized such that it has at least as much capacity as the cathode 106, and preferably at least 10% excess capacity and in some embodiments up to 50% excess capacity at beginning of life and full charge to account for Li metal that may be consumed in side reactions that take place during cycling.

The cathode 106 in one embodiment only includes an active Li-insertion material. In various embodiments the cathode 106 includes a sulfur or sulfur-containing material (e.g., PAN-S composite or Li₂S); an air electrode; Li-insertion materials such as NCM, LiNi_{0.5}Mn_{1.5}O₄, Li-rich layered oxides, LiCoO₂, LiFePO₄, LiMn₂O₄; Li-rich NCM, NCA, and other Li intercalation materials, or blends thereof or any other active material or blend of materials that react with and/or insert Li cations and/or electrolyte anions. The cathode 106 may include Li-conducting polymer, ceramic or other solid, non-polymer electrolyte. The cathode Li-insertion materials may additionally be coated (e.g., via spray coating) with a material such as LiNbO₃ in order to improve the flow of ions between the Li-insertion materials and the solid electrolyte, as described in T. Ohtomo et al., Journal of Power Sources 233 (2013) 231-235.

Solid electrolyte materials in the cathode 106 may further include lithium conducting garnets, lithium conducting sulfides (e.g., Li₂S-P₂S₅) or phosphates, Li₃P, LIPON, Li-conducting polymer (e.g., PEO), Li-conducting metal-organic frameworks such as described by Wiers et al. "A Solid Lithium Electrolyte via Addition of Lithium Isopropoxide to a Metal-Organic Framework with Open Metal Sites," Journal of American Chemical Society, 2011, 133 (37), pp 14522-14525, Li-conducting NaSICONs, Li₁₀GeP₂S₁₂, Li₇₋ₓLa₃TaₓZr₂₋ₓO₁₂, wherein 0≤X≤2, lithium polysulfidophosphates, or other solid Li-conducting material. Other solid electrolyte materials that may be used are described in Christensen et al., "A critical Review of Li/Air Batteries", Journal of the Electrochemical Society 159(2) 2012. Other materials in the cathode 106 may include electronically conductive additives such as carbon black, and optionally a binder to improve the coherence of the particles in the cathode (such as PVDF). The cathode materials are selected to allow sufficient electrolyte-cathode interfacial area for a desired design.

The separator structure 110 includes a solid electrolyte layer 112 that conducts Li ions but not electrons. The solid electrolyte layer 112 may be composed of a solid Li conductor (such as ceramics, a garnet material, Li₃N, LiPON, LiSICON, LTAP, sulfides, and others including those described in the previous paragraph, a composite solid electrolyte including crystalline and glassy ceramics, and polymers such those based on polyethylene oxide). The solid electrolyte structure has a thickness of about 100 nm to 50 µm.

A secondary protection layer 114 is formed on the side of the separator structure 110 which faces or abuts the cathode 106. The protection layer 114 is typically about 1nm to 50 nm thick. The protection layer 114 is a continuous coating over the entire side of the solid electrolyte layer 112. In one embodiment, the protection layer 114 is applied to the solid electrolyte layer 112 by atomic layer deposition (ALD). In an alternative embodiment, the protection layer 114 is applied to the solid electrolyte layer 112 by chemical vapor deposition (CVD). The advantage of using ALD is that the high temperatures required for CVD are avoided, and the thickness of the coating is very precisely controlled.

The material used to form the protection layer 114, in addition to being amendable to formation by ALD or CVD, is preferably transparent to Li+, while being a barrier to electrons and any solvent within the cell 100. Materials which are used according to the invention for the protection layer 114 include Al₂O₃ or Si₃N₄, both of which have known ALD processes and, when sufficiently thin, allow Li transport. In other embodiments, which are not part of the invention, Li-conducting materials such as Li₃N, Li₃P, and LiPON are used.

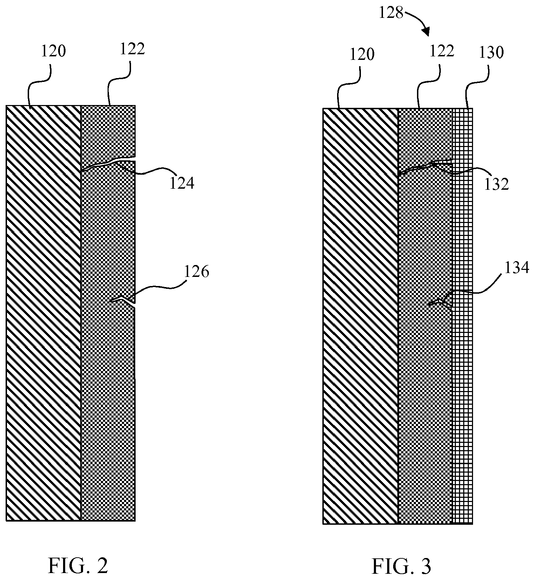

The objective in using a solid electrolyte layer 112 is that typically no ionic liquid or electrons will be able to penetrate. In the formation of the solid electrolyte layer 112, however, defects may be present. For example, FIG. 2 depicts an anode 120 with a separator electrolyte layer 122. The electrolyte layer 122 includes a pinhole defect 124 which extends completely through the electrolyte layer 122 and a pinhole defect 126 which extends partially through the electrolyte layer 122. In operation, the defects 124 and 126 can be a channel for solvent. Even in completely solid state applications the defects 124 and 126 can enable the growth of dendrites through the defects 124 and 126.

As depicted in FIG. 3, when the separator structure 128 is finally formed by applying a protective layer 128 to the electrolyte layer 122, the defects 124 and 136 are filled with protective layer fingers 132 and 134. Accordingly, there is no path for solvent to flow through the separator structure. Moreover, the fingers 132/134 inhibit growth of dendrites therethrough.

While the embodiment of FIGs. 2 and 3 depict formation of the protective layer 130 after the separator has been positioned on the anode 120, in some embodiments the protective layer is formed prior to positioning the protective layer on the anode. This allows a protective layer to be formed on all surfaces of the electrolyte layer. In some embodiments, the surface of the separator structure which is to be positioned on the anode is polished to remove the portion of the protective layer on the anode facing side of the separator structure. In other embodiments, the protective layer is sufficiently thin that it remains. This allows defects extending partially through the electrolyte layer from the anode side to be filled. In further embodiments, the protected solid electrolyte is positioned directly on a copper current collector with lithium being deposited between the copper and the solid electrolyte structure during the first charge cycle.

The above described embodiments provide a coating over the entire cathode facing surface of an electrolyte layer. The protective layer can be incorporated into a variety of cell types including all-solid-state cells or any cell including a lithium anode.

While the disclosure has been illustrated and described in detail in the drawings and foregoing description, the same should be considered as illustrative and not restrictive in character. It is understood that only the preferred embodiments have been presented and that all changes, modifications and further applications that come within the scope of the invention as defined in the appended claims are desired to be protected.

## Claims

1. A lithium-ion battery, comprising:
an anode;
a cathode;
a solid electrolyte layer positioned between the anode and the cathode; and
a first protective layer continuously coating a cathode facing side of the solid electrolyte layer, the first protective layer formed on the cathode facing side in such a manner that a space within the solid electrolyte layer opening to the cathode facing side is filled with a first protective layer finger extending at least partially through the electrolyte layer,
wherein the anode includes a form of lithium;
the cathode includes a form of sulfur; and
the first protective layer comprises Al₂O₃ or Si₃N₄.

2. The battery of claim 1, wherein:
the solid electrolyte layer has a thickness of about 100 nm to 50 µm; and
the first protective layer has a nominal thickness of between about 1 nm and 50 nm.

3. The battery of claim 2, further comprising:
a second protective layer coating an anode facing side of the solid electrolyte layer, the second protective layer formed on the anode facing side in such a manner that a space within the solid electrolyte layer opening to the anode facing side is filled with a second protective layer finger.

4. A method of forming a lithium-ion battery, comprising:
providing an anode;
providing a cathode;
filling a space within a solid electrolyte layer opening to a first side of the solid electrolyte layer with a protective layer finger extending at least partially through the electrolyte layer and comprising Al₂O₃ or Si₃N₄;
forming a continuous coating of a first protective layer on the first side; and
positioning the solid electrolyte layer between the anode and the cathode with the first protective layer positioned between the electrolyte layer and the cathode;
wherein forming the continuous coating comprises:
forming the continuous coating of the first protective layer on the first side of the solid electrolyte layer using chemical vapor deposition or atomic layer deposition; and wherein forming the continuous coating further comprises:
forming a continuous coating of Al₂O₃ or Si₃N₄ on the first side.

5. The method of claim 4, further comprising:
forming a continuous coating of a second protective layer on a second side of the solid electrolyte layer.

6. The method of claim 5, wherein positioning the solid electrolyte layer between the anode and the cathode comprises:
positioning the solid electrolyte layer between the anode and the cathode with the second protective layer positioned between the electrolyte layer and the anode.

7. The method of claim 5, further comprising:
polishing the second protective layer; and
exposing a portion of the second side by polishing the second protective layer.

8. The method of claim 7, wherein providing the anode comprises:
providing an anode including a form of lithium.

9. The method of claim 8, wherein providing the cathode comprises:
providing a cathode including a form of sulfur.

10. The method of claim 4, wherein forming the continuous coating comprises:
forming the continuous coating with a nominal thickness of between about 1 nm and 50 nm.

## Patentansprüche

1. Lithiumionenbatterie, umfassend:
eine Anode;
eine Kathode;
eine feste Elektrolytschicht, die zwischen der Anode und der Kathode angeordnet ist; und
eine erste Schutzschicht, die eine kathodenzugewandte Seite der festen Elektrolytschicht kontinuierlich bedeckt, wobei die erste Schutzschicht auf eine derartige Weise auf der kathodenzugewandten Seite gebildet ist, dass ein Raum innerhalb der festen Elektrolytschicht, der sich zu der kathodenzugewandten Seite öffnet, mit einem erste-Schutzschicht-Finger gefüllt wird, der sich wenigstens teilweise durch die Elektrolytschicht erstreckt,
wobei die Anode eine Form von Lithium enthält;
die Kathode eine Form von Schwefel enthält; und
die erste Schutzschicht Al₂O₃ oder Si₃N₄ umfasst.

2. Batterie gemäß Anspruch 1, wobei:
die feste Elektrolytschicht eine Dicke von etwa 100 nm bis 50 µm aufweist; und
die erste Schutzschicht eine nominelle Dicke von zwischen etwa 1 nm und 50 nm aufweist.

3. Batterie gemäß Anspruch 2, ferner umfassend:
eine zweite Schutzschicht, die eine anodenzugewandte Seite der festen Elektrolytschicht bedeckt, wobei die zweite Schutzschicht auf eine derartige Weise auf der anodenzugewandten Seite gebildet ist, dass ein Raum innerhalb der festen Elektrolytschicht, der sich zu der anodenzugewandten Seite öffnet, mit einem zweite-Schutzschicht-Finger gefüllt wird.

4. Verfahren zur Herstellung einer Lithiumionenbatterie, umfassend:
Bereitstellen einer Anode;
Bereitstellen einer Kathode;
Füllen eines Raums innerhalb einer festen Elektrolytschicht, der sich zu einer ersten Seite der festen Elektrolytschicht öffnet, mit einem Schutzschicht-Finger, der sich wenigstens teilweise durch die Elektrolytschicht erstreckt und Al₂O₃ oder Si₃N₄ umfasst;
Bilden einer kontinuierlichen Beschichtung aus einer ersten Schutzschicht auf der ersten Seite; und
Anordnen der festen Elektrolytschicht zwischen der Anode und der Kathode, wobei die erste Schutzschicht zwischen der Elektrolytschicht und der Kathode angeordnet ist;
wobei das Bilden der kontinuierlichen Beschichtung umfasst:
Bilden der kontinuierlichen Beschichtung aus der ersten Schutzschicht auf der ersten Seite der festen Elektrolytschicht unter Verwendung von chemischer Dampfabscheidung oder Atomschichtabscheidung; und
wobei das Bilden der kontinuierlichen Beschichtung ferner umfasst:
Bilden einer kontinuierlichen Beschichtung aus Al₂O₃ oder Si₃N₄ auf der ersten Seite.

5. Verfahren gemäß Anspruch 4, ferner umfassend:
Bilden einer kontinuierlichen Beschichtung aus einer zweiten Schutzschicht auf einer zweiten Seite der festen Elektrolytschicht.

6. Verfahren gemäß Anspruch 5, wobei das Anordnen der festen Elektrolytschicht zwischen der Anode und der Kathode umfasst: Anordnen der festen Elektrolytschicht zwischen der Anode und der Kathode, wobei die zweite Schutzschicht zwischen der Elektrodenschicht und der Anode angeordnet ist.

7. Verfahren gemäß Anspruch 5, ferner umfassend:
Polieren der zweiten Schutzschicht; und
Freilegen eines Teils der zweiten Seite durch Polieren der zweiten Schutzschicht.

8. Verfahren gemäß Anspruch 7, wobei das Bereitstellen der Anode umfasst:
Bereitstellen einer Anode, die eine Form von Lithium enthält.

9. Verfahren gemäß Anspruch 8, wobei das Bereitstellen der Kathode umfasst:
Bereitstellen einer Kathode, die eine Form von Schwefel enthält.

10. Verfahren gemäß Anspruch 4, wobei das Bilden der kontinuierlichen Beschichtung umfasst:
Bilden der kontinuierlichen Beschichtung mit einer nominellen Dicke von zwischen etwa 1 nm und 50 nm.

## Revendications

1. Batterie au lithium-ion, comprenant :
une anode ;
une cathode ;
une couche d'électrolyte solide positionnée entre l'anode et la cathode ; et
une première couche protectrice recouvrant de façon continue un côté faisant face à la cathode de la couche d'électrolyte solide, la première couche protectrice étant formée sur le côté faisant face à la cathode de telle sorte qu'un espace à l'intérieur de la couche d'électrolyte solide s'ouvrant sur le côté faisant face à la cathode est rempli avec un premier doigt de couche protectrice s'étendant au moins partiellement à travers la couche d'électrolyte,
dans laquelle l'anode comporte une forme de lithium ;
la cathode comporte une forme de soufre ; et
la première couche protectrice comprend de l'Al₂O₃ ou du Si₃N₄.

2. Batterie de la revendication 1, dans laquelle :
la couche d'électrolyte solide a une épaisseur d'environ 100 nm à 50 µm ; et
la première couche protectrice a une épaisseur nominale comprise entre environ 1 nm et 50 nm.

3. Batterie de la revendication 2, comprenant en outre :
une deuxième couche protectrice recouvrant un côté faisant face à l'anode de la couche d'électrolyte solide, la deuxième couche protectrice étant formée sur le côté faisant face à l'anode de telle sorte qu'un espace à l'intérieur de la couche d'électrolyte solide s'ouvrant sur le côté faisant face à l'anode est rempli avec un deuxième doigt de couche protectrice.

4. Procédé de formation d'une batterie au lithium-ion, comprenant :
l'obtention d'une anode ;
l'obtention d'une cathode ;
le remplissage d'un espace à l'intérieur d'une couche d'électrolyte solide s'ouvrant sur un premier côté de la couche d'électrolyte solide avec un doigt de couche protectrice s'étendant au moins partiellement à travers la couche d'électrolyte et comprenant de l'Al₂O₃ ou du Si₃N₄ ;
la formation d'un revêtement continu d'une première couche protectrice sur le premier côté ; et
le positionnement de la couche d'électrolyte solide entre l'anode et la cathode avec la première couche protectrice positionnée entre la couche d'électrolyte et la cathode ;
dans lequel la formation du revêtement continu comprend :
la formation du revêtement continu de la première couche protectrice sur le premier côté de la couche d'électrolyte solide au moyen d'un dépôt chimique en phase vapeur ou d'un dépôt de couches atomiques ; et
dans lequel la formation du revêtement continu comprend en outre :
la formation d'un revêtement continu d'Al₂O₃ ou de Si₃N₄ sur le premier côté.

5. Procédé de la revendication 4, comprenant en outre :
la formation d'un revêtement continu d'une deuxième couche protectrice sur un deuxième côté de la couche d'électrolyte solide.

6. Procédé de la revendication 5, dans lequel le positionnement de la couche d'électrolyte solide entre l'anode et la cathode comprend :
le positionnement de la couche d'électrolyte solide entre l'anode et la cathode avec la deuxième couche protectrice positionnée entre la couche d'électrolyte et l'anode.

7. Procédé de la revendication 5, comprenant en outre :
le polissage de la deuxième couche protectrice ; et
l'exposition d'une partie du deuxième côté par polissage de la deuxième couche protectrice.

8. Procédé de la revendication 7, dans lequel l'obtention de l'anode comprend :
l'obtention d'une anode comportant une forme de lithium.

9. Procédé de la revendication 8, dans lequel l'obtention de la cathode comprend :
l'obtention d'une cathode comportant une forme de soufre.

10. Procédé de la revendication 4, dans lequel la formation du revêtement continu comprend :
la formation du revêtement continu avec une épaisseur nominale comprise entre environ 1 nm et 50 nm.
